Europäisches Patentamt

European Patent Office

Office européen des brevets

(11) Publication number: **0 351 218**
A2

# (12) EUROPEAN PATENT APPLICATION

(21) Application number: **89307113.4**

(22) Date of filing: **13.07.89**

(51) Int. Cl.⁵: **A 23 L 1/212**
**A 23 L 1/223**

(30) Priority: **14.07.88 JP 173900/88**

(43) Date of publication of application:
**17.01.90 Bulletin 90/03**

(84) Designated Contracting States:
**CH DE FR GB IT LI SE**

(71) Applicant: **TOKYO TANABE COMPANY LIMITED**
**2-6, Nihonbashi-Honcho 2-chome**
**Chuo-ku Tokyo 103 (JP)**

(72) Inventor: **Kikuchi, Yasuhiko**
**37-1, Aza Kamada-machi Taira**
**Iwaki-shi Fukushima (JP)**

**Nakazawa, Shinzo**
**1576, Oh-aza Yuuki**
**Yuuki-shi Ibaraki (JP)**

**Yamaura, Takuro**
**14-2, Akamatsudai 2-chome**
**Ashikaga-shi Tochigi (JP)**

(74) Representative: **Holmes, Michael John et al**
**Frank B. Dehn & Co. imperial House 15-19 Kingsway**
**London WC2B 6UZ (GB)**

(54) **Food additive.**

(57) A food additive comprising unbleached dried gourd is
provided. The food additive is effective in improving the taste of
processed foods to which it is added.

EP 0 351 218 A2

**Description**

# FOOD ADDITIVE

This invention relates to a food additive comprising dried gourd fruit. More particularly, it relates to a food additive comprising dried gourd fruit prepared without bleaching by fumigation with sulfur (hereinafter referred to as "unbleached dried gourd").

In Japan, gourd fruit has been eaten as food from ancient times. It is a highly nutritious food containing a well-balanced combination of sugar, fibers, protein, vitamins, calcium, pectin and the like. Dried gourd shavings are called "Kanpyo" and have long been popularly used as an ingredient of sushi and other dishes.

Since dried gourd shavings have an intrinsic water content as high as 15 to 40 % and, moreover, are a highly nutritious food as described above, they tend to spoil readily through microbial degradation. Thus, 3 or 4 months after preparation, they suffer a change in properties (such as color, odor, taste, etc.) and quality. For this reason, much care has been required in the storage of gourd fruit and products thereof.

In order to keep the quality of dried gourd shavings, there has been proposed a method in which the flesh of a gourd is sliced into ribbons, dried and then fumigated with sulfur for bleaching and sterilizing purposes [Japanese Patent Publication No. 21292/'82; "Food Industry", Vol. 3, Book II, p. 52 (1982)]. However, using this method the presence of residual sulfur cannot be avoided. As is recognised by the Food Sanitation Act (i.e., the amount of residual sulfur as sulfur dioxide should be not greater than 5 g per kg of food), sulfur is very harmful to human beings and the presence of any residual sulfur is undesirable. Accordingly, dried gourd shavings need to be washed in water prior to eating and this causes most of the water-soluble nutrients (such as sugars, pectin, vitamins, etc.) present therein to be washed away. Similarly, a gourd food made by reducing such dried gourd shavings to powder is also deprived of most of its water-soluble nutrients.

In order to overcome the above-described disadvantage, there has been proposed a gourd food (unbleached dried gourd) made without bleaching by fumigation with sulfur. This gourd food is quite safe from the viewpoint of food sanitation, is highly nutritious, and has good keeping quality, so that it can be eaten for nourishing purposes (Japanese Patent Laid-Open No. 32458/'88).

It is also known that unbleached dried gourd has a neutral detergent fiber (NDF) content of about 30 % (Japanese Patent Laid-Open No. 32458/'88). NDF is a typical food fiber, and it is well known that people with a high fiber intake have a low incidence of rectal cancer.

Recently, it has been found that dried gourd has the effect of promoting the growth of Bifidobacterium species selectively and markedly (Japanese Patent Application No. 123761/'87). It has been established that these bacteria lack pathogenicity, occur principally in the intestine of human beings, and have a physiological significance in the suppression of formation of intestinal putrefaction products and the improvement of diarrhea or constipation.

Since the known application of unbleached dried gourd has been limited to its use as a nourishing food, there is a demand for the development of a new use for it.

As a result of intensive research with unbleached dried gourd, the present inventors have found that its addition to processed foods greatly improves the taste thereof, that it has a very high swelling capacity, and have confirmed that it is useful as a food additive and, in particular, as a seasoning. The present invention has been completed on the basis of these findings.

Thus, viewed from one aspect the present invention provides a food additive comprising unbleached dried gourd.

Viewed from a further aspect the invention provides use of unbleached dried gourd as a food additive for improving the taste and/or texture of foods.

Preferably, in tests for microbial contamination the unbleached dried gourd of the present invention has a standard plate count of not more than $5 \times 10^3$ microbial cells/g, is negative to the tests for the coliform group and Salmonella species, and has a water content of not greater than 8 %. The unbleached dried gourd of the present invention can be prepared, for example, by peeling off the rind of a gourd, slicing its entire flesh (including the fluffy portion) into discs of about 5mm thickness, exposing the slices to the sun for a day to reduce their water content to about 25 % or less, sterilizing them with steam at a presssure of $0.2 \text{ kg/cm}^2$ for 20 minutes, and then drying them in hot air at 60° until their water content is reduced to about 3 %. The dried gourd slices may be ground to powder, if necessary.

The amount of unbleached dried gourd added to a processed food is usually in the range of 1 to 50%, preferably 1 to 10% by weight, based on the total weight of the processed food. If the amount is less than 1 %, the effects of its addition may not manifest themselves. The actual amount of unbleached dried gourd added may be suitably determined according to the type of the processed food to which it is added. Moreover, in determining the amount of unbleached dried gourd added, consideration should be taken of the fact that unbleached dried gourd has such a high degree of swelling that, when mixed with 100 ml of water, 5 g of it gives a volume of 85 ml.

Examples of the processed foods to which the unbleached dried gourd of the present invention can be added are as follows:

1. Various types of noodles such as wheat vermicelli, buckwheat vermicelli (soba), Chinese noodles, Japanese thin noodles (hiyamugi), Japanese fine noodles (somen), macaroni, spaghetti, coatings for won ton, giao-zi, shao-mai and zha-chun-juan, and the like. (These noodles may be in a raw, half-boiled, steamed, boiled, dried or precooked form).

Noodles containing unbleached dried gourd are characterized in that they taste better and can be cooked up in a shorter period of time. An increase in the gourd content is beneficial because the noodles have a higher degree of swelling and a smaller portion can satisfy the appetite.

2. Various types of bread and cakes such as loaves of bread, French rolls, buns, sponge cake, hot cakes, pancakes, pizza pies and the like; and cereal-based cakes and cookies such as rice-flour cakes, rice crackers, millet-and-rice cakes and the like.

The addition of unbleached dried gourd imparts good moisture retention properties thereto. Accordingly, even after the lapse of a long time, they remain moist and soft and taste good.

3. Various types of seasonings such as ketchup, sauces, dressings, soup, miso, soup stock, curry roux, mayonnaise and the like; and quick preparations thereof.

The addition of unbleached dried gourd makes them thicker and improves the taste thereof.

4. Ice cream, raw cream, sherbet, jelly, pudding, yogurt and agar-based confectionery.

The addition of unbleached dried gourd makes them soft to the palate and improves the taste thereof.

5. Processed fish and meat products such as boiled fish paste, dumplings for soup, sausages, hamburger steaks, giao-zi, shao-mai, meat dumplings and the like.

The addition of unbleached dried gourd makes them pleasant to the palate and improves the taste thereof.

6. Processed adzuki-bean products such as bean jam, adzuki-bean jelly, sweet rice jelly and the like.

The addition of unbleached dried gourd makes them remain moist for long and taste good.

7. Fried dishes such as tempura, fries and the like.

The addition of unbleached dried gourd gives them a soft and full finish and makes them fragrant and delicious.

The unbleached dried gourd of the present invention is usually used in powder form. If desired, however, it may be used in a coarsely ground form.

Example 1

According to conventional procedure, bread (sample A) was made of 220 g of high-gluten flour, 3 g of dry yeast, 4 g of salt, 14 g of sugar, 5 g of skim milk, 15 g of butter, 36 g of unbleached dried gourd powder and 180 ml of water. For purposes of comparison, bread (sample B) was also made using the aforesaid formulation from which the unbleached dried gourd powder was omitted, and used as a control for organoleptic examination. After these bread samples were allowed to stand for 2 days, they were subjected to an organoleptic examination. Specifically, the taste of the bread samples, either untoasted or toasted, was evaluated in a two-point test by 10 trained panelists. The results thus obtained are shown in Table 1.

Table 1

|  |  | A | B |
|---|---|---|---|
| Untoasted | It tastes good. | 10 | 1 |
|  | It does not taste good. | 0 | 9 |
| Toasted | It tastes good. | 9 | 0 |
|  | It does not taste good. | 1 | 10 |

(Note) The differences were significant at the 1 % level (by Fisher's direct probability test)

It is evident from Table 1 that the bread made with unbleached dried gourd was significantly preferred to the bread made without it.

Example 2

According to conventional procedure, ice cream (sample A) was made of 100 ml of raw cream, 50 ml of milk, an egg (about 57 g), two tablespoonfuls of sugar and 3 g of unbleached dried gourd powder. For purposes of comparison, ice cream (sample B) was also made without addition of unbleached dried gourd powder. These ice cream samples were organoleptically evaluated in a two-point test by 10 trained panelists. The results thus obtained are shown in Table 2.

Table 2

|  | A | B |
|---|---|---|
| It is pleasant to the palate. | 8 | 2 |
| It is not pleasant to the palate. | 2 | 8 * |
| It has a soft finish. | 8 | 3 |
| It does not have a soft finish. | 2 | 7 + |

(Note) * Significant at the 5 % level.
+ Significant at the 10 % level.

(Both are by Fisher's direct probability test).

It is evident form Table 2 that the ice cream made with unbleached dried gourd was significantly preferred to the ice cream made without it.

Example 3

According to conventional procedure, sherbet (sample A) was made of 400 ml of milk, two tablespoonfuls (32 g) of sugar and 8 g of unbleached dried gourd powder. For purposes of comparison, sherbet (sample B) was also made without addition of unbleached dried gourd powder. These sherbet samples were organoleptically evaluated in a two-point test by 10 trained panelists. The results thus obtained are shown in Table 3.

Table 3

|  | A | B |
|---|---|---|
| It is pleasant to the palate. | 8 | 2 |
| It is not pleasant to the palate. | 2 | 8 * |
| It has a soft finish. | 8 | 3 |
| It does not have a soft finish. | 2 | 7 + |

(Note) * Significant at the 5 % level.
+ Significant at the 10 % level.

(Both are by Fisher's direct probability test).

It is evident from Table 3 that the sherbet made with unbleached dried gourd was significantly preferred to the sherbet made without it.

Example 4

According to conventional procedure, 4 raw hamburger steaks (sample A) were made of an onion (300 g) cut into tiny pieces and fried with a tablespoonful of butter to a light brown, a mixture of 100 g of bread crumbs and 60 g of unbleached dried gourd powder moistened with three tablespoonfuls (70 g) of milk, 300 g of minced beef, an egg (57 g), 2/3 teaspoonful (3.3 g) of salt, and a small quantity of pepper. Then, these hamburger steaks were roasted with salad oil. For purposes of comparison, 4 hamburger steaks (sample B) were also made without addition of unbleached dried gourd powder (but with 120 g of bread crumbs). These hamburger steak samples were organoleptically evaluated in a two-point test by 10 trained panelists. The results thus obtained are shown in Table 4.

4

## Table 4

| | A | B |
|---|---|---|
| It has a soft taste. | 8 | 0 |
| It does not have a soft taste. | 2 | 10 ** |
| It tastes good. | 8 | 2 |
| It does not taste good. | 2 | 8 * |

(Note) ** Significant at the 1 % level.

　　　　* Significant at the 5 % level.

　　　　(Both are by Fisher's direct probability test).

It is evident from Table 4 that the hamburger steaks made with unbleached dried gourd were significantly preferred to the hamburger steaks made without it.

Example 5

According to conventional procedure, mayonnaise (sample A) was made of two egg yolks (65 g), 1/2 teaspoonful (3 g) of salt, 1/2 teaspoonful (about 3 g) of mustard powder, a small quantity of pepper, 8 g of unbleached dried gourd powder, 360 ml of salad oil and 36 ml of vinegar. For purposes of comparison, mayonnaise (sample B) was also made without addition of unbleached dried gourd powder. These mayonnaise samples were organoleptically evaluated in a two-point test by 10 trained panelists. The results thus obtained are shown in Table 5.

### Table 5

| | A | B |
|---|---|---|
| It has a pleasant flavor of vinegar. | 8 | 0 |
| It does not have a pleasant flavor of vinegar. | 2 | 10 ** |
| It has a soft taste. | 8 | 0 |
| It does not have a soft taste. | 2 | 10 ** |
| It tastes good. | 8 | 3 |
| It does not taste good. | 2 | 7 + |

(Note) ** Significant at the 1 % level.
+ Significant at the 10 % level.

(Both are by Fisher's direct probability test).

It is evident from Table 5 that the mayonnaise made with unbleached dried gourd was significantly preferred to the mayonnaise made without it.

Example 6

An egg and 15 g of unbleached dried gourd were added to 150 ml of water, followed by vigorous stirring. Then, 85 g of wheat flour was added thereto, followed by stirring. Finally, 3 or 4 pieces of ice were added thereto to prepare tempura batter. This batter was fried in oil to make bits of fried tempura batter (sample A). For purposes of comparison, bits of fried tempura batter (sample B) were also made without addition of unbleached dried gourd powder. These fried tempura batter samples were organoleptically evaluated in a two-point test by 10 trained panelists. The results thus obtained are shown in Table 6.

Table 6

|  | A | B |
|---|---|---|
| It has a good finish. | 9 | 1 |
| It does not have a good finish. | 1 | 9 |
| It tastes good. | 9 | 1 |
| It does not taste good. | 1 | 9 |

(Note) The differences were significant at the 1 % level.

(By Fisher's direct probability test).

It is evident from Table 6 that the bits of fried tempura batter made with unbleached dried gourd were significantly preferred to the bits of fried tempura batter made without it.

Example 7

A mixture of 360 g of sugar and 720 ml of water was heated, and 180 g of powder bean jam and 24 g of unbleached dried gourd powder were added thereto. The resulting bean jam was stirred with a dipper until it did not drip from the dipper, and then allowed to cool. In the meantime, 8 g of agar was soaked in water overnight, squeezed well, and then heated in 540 ml of water. After the agar was dissolved, 200 g of sugar was added thereto. After the sugar was dissolved, the resulting solution was strained and mixed with 800 g of the above bean jam. This mixture was heated, poured into a vessel, and then cooled to make soft adzuki-bean jelly (sample A). For purposes of comparison, soft adzuki-bean. jelly (sample B) was also made without addition of unbleached dried gourd powder. These soft adzuki-bean jam samples were organoleptically evaluated in a two-point test by 10 trained panelists. The results thus obtained are shown in Table 7.

Table 7

|  | A | B |
|---|---|---|
| It is pleasant to the palate. | 8 | 3 |
| It is not pleasant to the palate. | 2 | 7 + |
| It has a soft sweetness. | 8 | 2 |
| It does not have a soft sweetness. | 2 | 8 * |
| It tastes good. | 8 | 2 |
| It does not taste good. | 2 | 8 * |

(Note) * Significant at the 5 % level.
+ Significant at the 10 % level.

(Both are by Fisher's direct probability test).

As is evident from Tables 1 to 7, the food additive of the present invention, which comprises unbleached dried gourd, is effective in improving the taste of processed foods to which it is added.

**Claims**

1. A food additive comprising unbleached dried gourd.

2. A food additive as claimed in claim 1 wherein said unbleached dried gourd has a standard plate count of not more than $5 \times 10^3$ microbiol cells/g, is negative to the tests for the coliform group and <u>salmonella</u> species, and has a water content of not greater than 8%.

3. A food additive as claimed in claim 1 or claim 2 wherein said unbleached dried gourd is prepared by peeling off the rind of a gourd, slicing its entire flesh (including the fluffy portion) into discs of about 5mm thickness, exposing the slices to the sun for a day to reduce their water content to about 25% or less, sterilizing the slices by exposing them to steam at a pressure of 0.2 kg/cm² for a period of 20 minutes, and then drying them in hot air at 60°C until their water content is reduced to about 3%.

4. A food additive as claimed in any one of claims 1 to 3 which is powdered or coarsely ground.

5. Use of a food additive as defined in any one of claims 1 to 4 for improving the taste and/or texture of foods.

6. Use as claimed in claim 5 wherein said additive is added to food in an amount of 1 to 50% by weight.

7. Use as claimed in claim 5 or claim 6 wherein said additive is added to food in an amount of 1 to 10% by weight.

8. Use as claimed in any one of claims 5 to 7 wherein said foods are selected from noodles, bakery products, sauces, soups, dressings, ice-cream, cream, yoghurt and agar-based confectionary, processed bean products and processed fish and meat products.